# EUROPÄISCHE PATENTANMELDUNG

(11) **EP 4 400 241 A1**
(43) Veröffentlichungstag der Anmeldung: **17.07.2024**
(21) Anmeldenummer: 23151164.3
(22) Anmeldetag: 11.01.2023
(51) Int. Cl.: B23D 59/00, B23D 61/02

(54) **WANDSÄGE MIT EINEM LESEGERÄT ZUM DATENAUSTAUSCH MIT EINER KOMMUNIKATIONSVORRICHTUNG**

(71) Anmelder: Hilti Aktiengesellschaft, 9494 Schaan (LI)
(72) Erfinder: Balter, Marco, 6830 Rankweil (AT); Volke, Dominik, 9475 Sevelen (CH); Rieger, Hans-Joerg, 6712 Thueringen (AT)
(74) Vertreter: Hilti Aktiengesellschaft Corporate Intellectual Property

(57) **Zusammenfassung**

Die vorliegende Erfindung betrifft eine Wandsäge zum Einbringen von Schnitten in einen Untergrund, insbesondere Beton. Die Wandsäge weist einen Sägekopf, einen Blattschutz und einen Schwenkarm auf und kann zum Einbringen der Schnitte mit einem Sägeblatte verbunden werden. Das Sägeblatt umfasst eine Kommunikationsvorrichtung, wobei die Kommunikationsvorrichtung dazu eingerichtet ist, Betriebsparameter der Wandsäge und/oder des Sägeblatts aufzuzeichnen, wobei die Wandsäge ein Lesegerät zum Auslesen von Daten aus der Kommunikationsvorrichtung aufweist, wobei das Lesegerät in oder an dem Sägekopf, dem Blattschutz oder dem Schwenkarm der Wandsäge angeordnet vorliegt. Mit der Erfindung kann bei Betrieb der Wandsäge ein besonders geringer Abstand zwischen Kommunikationsvorrichtung und Lesegerät ermöglicht werden, so dass mit der Erfindung gute Voraussetzungen für den Datenaustausch zwischen Kommunikationsvorrichtung und Lesegerät geschaffen werden.

## Beschreibung

Die vorliegende Erfindung betrifft eine Wandsäge zum Einbringen von Schnitten in einen Untergrund, insbesondere Beton. Die Wandsäge weist einen Sägekopf, einen Blattschutz, einen Blattschutzhalter und einen Schwenkarm auf und kann zum Einbringen der Schnitte mit einem Sägeblatte verbunden werden. Das Sägeblatt umfasst eine Kommunikationsvorrichtung, wobei die Kommunikationsvorrichtung dazu eingerichtet ist, Betriebsparameter der Wandsäge und/oder des Sägeblatts aufzuzeichnen, wobei die Wandsäge ein Lesegerät zum Auslesen von Daten aus der Kommunikationsvorrichtung aufweist, wobei das Lesegerät in oder an dem Sägekopf, dem Blattschutz, dem Blattschutzhalter oder dem Schwenkarm der Wandsäge angeordnet vorliegt. Mit der Erfindung kann bei Betrieb der Wandsäge ein besonders geringer Abstand zwischen Kommunikationsvorrichtung und Lesegerät ermöglicht werden, so dass mit der Erfindung gute Voraussetzungen für den Datenaustausch zwischen Kommunikationsvorrichtung und Lesegerät geschaffen werden.

### Hintergrund der Erfindung:

Im Bereich der Werkzeugmaschinen ist die Verwendung von kleinen Datenaustauschsystemen bekannt, mit denen passende Werkzeuge für eine Werkzeugmaschine identifiziert werden können. Solche Datenaustauschsysteme können einen Sender und einen Empfänger umfassen, die miteinander Daten, wie zum Beispiel Identifikationskennungen, austauschen können. Im Stand der Technik sind beispielsweise Bohrgeräte oder Bohrhämmer bekannt, bei denen ein Kommunikationspartner des Datenaustauschsystems in oder an dem Werkzeug des Bohrgeräts angeordnet vorliegt, während der andere Kommunikationspartner des Datenaustauschsystems beispielsweise im Bohrfutter angeordnet vorliegen kann. Allerdings sind im Stand der Technik keine befriedigenden technischen Lösungen zur Anbringung von Kommunikationspartnern eines solchen Datenaustauschsystems für Wandsägen bekannt.

Die Aufgabe, die der vorliegenden Erfindung zugrunde liegt, besteht darin, eine Wandsäge mit einem Datenaustauschsystems aus mindestens zwei Kommunikationspartnern bereitzustellen. Dabei sollen die Kommunikationspartnern derart an der Wandsäge angeordnet sein, dass ein guter Datenaustausch zwischen den Kommunikationspartnern ermöglicht wird. Darüber hinaus soll der Betrieb der Wandsäge durch das Datenaustauschsystem möglichst wenig gestört werden.

Die Aufgabe wird gelöst durch den Gegenstand des unabhängigen Anspruchs 1. Vorteilhafte Ausführungsformen zu dem Gegenstand des unabhängigen Anspruchs finden sich in den abhängigen Ansprüchen.

### Beschreibung der Erfindung:

Erfindungsgemäß ist eine Wandsäge zum Einbringen von Schnitten in einen Untergrund, insbesondere Beton, vorgesehen, wobei die Wandsäge zum Einbringen der Schnitte mit einem Sägeblatte verbindbar ist und einen Sägekopf, einen Blattschutz, einen Blattschutzhalter und einen Schwenkarm aufweist. Das Sägeblatt umfasst eine Kommunikationsvorrichtung, wobei die Kommunikationsvorrichtung dazu eingerichtet ist, Betriebsparameter der Wandsäge und/oder des Sägeblatts aufzuzeichnen, wobei die Wandsäge ein Lesegerät zum Auslesen von Daten aus der Kommunikationsvorrichtung aufweist, wobei das Lesegerät in oder an dem Sägekopf, dem Blattschutz, dem Blattschutzhalter oder dem Schwenkarm der Wandsäge angeordnet vorliegt. Das Lesegerät kann ein Empfänger und die Kommunikationsvorrichtung einen Sender in einem darstellen, mit dem Daten und/oder Betriebsparameter zwischen den Kommunikationspartnern "Kommunikationsvorrichtung» als Sender und «Lesegerät» als Empfänger ausgetauscht werden können.

Die Erfindung betrifft insbesondere eine Wandsäge mit einem Lesegerät, das zum Datenaustausch mit einer Kommunikationsvorrichtung eingerichtet ist. Das Lesegerät ist vorzugsweise Bestandteil der Wandsäge und liegt in oder an einer Komponente der Wandsäge angeordnet vor. Bei der Komponente der Wandsäge kann es sich um eine Sägekopf, einen Blattschutz, einen Blattschutzhalter oder einen Schwenkarm handeln. Die Kommunikationsvorrichtung liegt in oder an dem Sägeblatt der Wandsäge angeordnet vor. Mit der Erfindung kann insbesondere ein Abstand zwischen dem Lesegerät und die Kommunikationsvorrichtung klein gehalten werden, so dass mit der Erfindung optimale strukturelle Voraussetzungen für den Datenaustausch zwischen Lesegerät und Kommunikationsvorrichtung geschaffen werden.

Durch die Anordnung des Lesegeräts in oder an dem Sägekopf, dem Blattschutz, dem Blattschutzhalter oder dem Schwenkarm der Wandsäge kann vorteilhafterweise sichergestellt werden, dass ein Abstand zwischen der Kommunikationsvorrichtung und dem Lesegerät möglichst klein ist. Auf diese Weise kann der Datenaustausch zwischen dem Lesegerät und der Kommunikationsvorrichtung erheblich verbessert werden. Tests haben gezeigt, dass das Lesegerät durch seine Anbringung in oder an dem Sägekopf, dem Blattschutz oder dem Schwenkarm der Wandsäge den Sägebetrieb der Wandsäge besonders wenig stört, so dass das Einbringen der Schnitte in den Untergrund mit der Wandsäge trotz der Vorsehung des Lesegeräts unkompliziert und störungsfrei vonstatten gehen kann. Es ist im Sinne der Erfindung bevorzugt, dass der Blattschutzhalter Bestandteil des Schwenkarms der Wandsäge ist. Der Blattschutzhalter kann insbesondere als mitschwenkender Blattschutzhalter ausgebildet sein, der vorteilhafterweise dazu eingerichtet ist, sich zusammen mit dem Schwenkarm zu bewegen. Es ist im Sinne der Erfindung ganz besonders bevorzugt, dass der Blattschutzhalter während des Betriebs der Werkzeugmaschine bzw. der Wandsäge im Wesentlichen senkrecht zur bearbeitenden Oberfläche bleibt. Bei der zu bearbeitenden Oberfläche kann es sich beispielsweise um eine BetonOberfläche handeln, die bearbeitet und/oder geschnitten werden soll. Insbesondere kann die vorgeschlagene Werkzeugmaschine dazu verwendet werden, Schnitte in eine solche BetonOberfläche einzubringen.

Es ist im Sinne der Erfindung bevorzugt, dass das Lesegerät derart in oder an der Wandsäge positioniert wird, dass sich bei Betrieb der Wandsäge ein Abstand zwischen dem Lesegerät und einem Zentrum des Sägeblatts vorzugsweise nicht verändert.

Es ist im Sinne der Erfindung bevorzugt, dass die Wandsäge eine Steuerelektronik umfasst, wobei die Steuerelektronik mit dem Lesegerät verbindbar ist. Vorzugsweise kann die Steuerelektronik in dem Sägekopf der Wandsäge angeordnet vorliegen. Wenn das Lesegerät ebenfalls in dem Sägekopf angeordnet vorliegt, kann die Steuerelektronik besonders einfach und ohne großen Verkabelungsaufwand mit dem Lesegerät verbunden werden. Insbesondere ist durch die gemeinsame Anordnung von Steuerelektronik und Lesegerät in dem Sägekopf der Wandsäge keine weitere Hardware zum Schutz des Lesegeräts notwendig. Vielmehr wird das Lesegerät in dieser Ausgestaltung der Erfindung gut durch das Gehäuse des Sägekopfes geschützt. Der Sägekopf kann insbesondere wasser- und staubdicht ausgebildet sein. Darüber hinaus kann das Lesegerät, wenn es in dem Sägekopf der Wandsäge angeordnet vorliegt und mit der Steuerelektronik der Wandsäge verbunden vorliegt, besonders einfach mit elektrischer Energie versorgt werden. Ein weiterer Vorteil dieser bevorzugten Ausführungsform der Erfindung besteht darin, dass ein besonders leistungsfähiges Lesegerät eingesetzt werden kann.

Es ist im Sinne der Erfindung bevorzugt, dass die Werkzeugmaschine batteriebetrieben ist und eine Batterie oder einen Akkumulator («Akku») aufweist. Beispielsweise kann die Werkzeugmaschine eine akku- oder batteriebetriebene Säge oder Wandsäge sein. In einer anderen Ausgestaltung der Erfindung kann es bevorzugt sein, dass die Werkzeugmaschine ein Netz-Gerät ist und über ein Stromkabel mit einem öffentlichen oder Bautellen-Netz zur Energieversorgung verbunden vorliegt. Wenn die Werkzeugmaschine batteriebetrieben ist, kann es im Sinne der Erfindung bevorzugt sein, dass eine Betriebs- und/oder Sendezeit des Lesegeräts angepasst oder eingeschränkt wird, um die Batterie, den Akku bzw. deren Laufzeit oder Reichweite zu schonen. Beispielsweise kann das Lesegerät in dieser Ausgestaltung der Erfindung kurz beim Starten oder Hochfahren des Sägeblattes der Werkzeugmaschine bzw. der Wandsäge eingeschaltet werden, um Betriebsparameter zu empfangen. Wenn es sich bei der Werkzeugmaschine um ein Netz-Gerät handelt, kann es im Sinne der Erfindung bevorzugt sein, dass das Lesegerät während des ganzen Betriebs der Werkzeugmaschine eingeschaltet ist und auf diese Weise beispielsweise während des Betriebs der Werkzeugmaschine Daten sammeln kann. Beispielsweise können in dieser Ausgestaltung der Erfindung Daten und/oder Betriebsparameter auch während des Sägens mit der Wandsäge ausgelesen werden. In einer besonders bevorzugten Ausgestaltung der Erfindung handelt es sich bei der Werkzeugmaschine um eine netzgebundene Werkzeugmaschine, die vorzugsweise mit einem Stromnetz verbunden ist, um elektrische Energie zu erhalten. Das Lesegerät als Komponente der Werkzeugmaschine kann ein batteriebetriebenes Lesegerät sein, das beispielsweise eine eigene kleine Batterie, wie eine Knopfzelle oder dergleichen aufweist.

Es kann im Sinne der Erfindung darüber hinaus bevorzugt sein, dass die Werkzeugmaschine dazu ausgebildet ist, zu erkennen, ob ausreichend Energie vorhanden ist, damit Daten und/oder Betriebsparameter zwischen den Kommunikationspartnern ausgetauscht werden. Beispielsweise kann die Werkzeugmaschine dazu eingerichtet sein, eine Sende- und/oder Empfangsleistung zu reduzieren, wenn eine Energieversorgung nur schwach ausgebildet ist oder wenn nur wenig Energie für Kommunikationszwecke zur Verfügung steht. Vorteilhafterweise kann im Kontext der vorliegenden Erfindung auch die Reichweite der Kommunikation und/oder eine Sende- und/oder Lesequalität der Kommunikationspartner an die für Kommunikationszwecke zur Verfügung stehende Energie angepasst werden.

Es ist im Sinne der Erfindung bevorzugt, dass eine (Kommunikations-)Verbindung zwischen der Elektronik der Werkzeugmaschine und dem Lesegerät besteht. Es kann aber im Sinne der Erfindung auch bevorzugt sein, dass das Lesegerät nicht mit der Elektronik der Werkzeugmaschine verbunden vorliegt. Vorzugsweise kann das Lesegerät insbesondere mechanisch an der Werkzeugmaschine oder ihren Komponenten befestigt bzw. montiert vorliegen. Das Lesegerät kann in dieser Ausgestaltung der Erfindung insbesondere als Zubehörteil für die Werkzeugmaschine betrachtet werden, wobei die Kommunikation zwischen Lesegerät auf der einen Seite und Werkzeugmaschine und/oder Fernbedienung für die Werkzeugmaschine auf der anderen Seite über Bluetooth erfolgen kann. Diese Ausgestaltung der Erfindung ist mit dem Vorteil verbunden, dass die Werkzeugmaschine nicht modifiziert werden muss, um sie kommunikationsfähig zu machen. Dadurch kann vorteilhafterweise eine kostengünstige Werkzeugmaschine bereitgestellt werden, die darüber hinaus auf eine verbesserte Wasserdichtigkeit aufweisen kann. Als weiterer Vorteil kann ein Nutzer der Werkzeugmaschine das Lesegerät selbst an der Werkzeugmaschine oder ihren Komponenten anbringen und/oder montieren.

Es ist im Sinne der Erfindung bevorzugt, dass der Blattschutz Kunststoff umfasst oder aus Kunststoff gebildet ist. Der Blattschutz stellt vorzugsweise ein besonders großes Bauteil im Kontext einer Wandsäge dar, das dazu eingerichtet ist, das ganze oder zumindest einen großen Anteil des Sägeblattes abzudecken, um den Nutzer der Wandsäge vor möglicherweise herumfliegenden Partikeln oder Stücken des Untergrunds zu schützen. Der Blattschutz kann Kunststoff umfassen oder aus Kunststoff gebildet sein, so dass er ideal für die Anbringung eines Lesegeräts geeignet ist.

Der Schwenkarm des Wandsäge kann vorzugsweise einen mitschwenkender Blattschutzhalter umfassen, wobei das Lesegerät vorzugsweise auch an dem Blattschutzhalter angeordnet vorliegen kann. Wenn das Lesegerät in oder an dem Schwenkarm des Wandsäge angeordnet vorliegt, kann dadurch vorteilhafterweise erreicht werden, dass sich der Abstand zwischen dem Lesegerät und dem Mittelpunkt des Sägeblatts vorzugsweise nicht verändert, wenn mit der Wandsäge gearbeitet wird. Ein weiterer Vorteil, der durch die Anbringung des Lesegeräts in oder an dem Schwenkarm des Wandsäge erreicht werden kann, besteht darin, dass sich die Öffnung im Blattschutz der Wandsäge im Wesentlichen parallel zum Lesegerät bewegt. Durch die Anbringung des Lesegeräts in oder an dem mitschwenkenden Blattschutzhalter der Wandsäge wendet sich die Erfindung gerade vom Stand der Technik ab, da viele konventionelle Wandsägen, wie sie aus dem Stand der Technik bekannt sind, keinen mitschwenkenden Blattschutzhalter aufweisen oder der Blattschutzhalter an einem Körper der Wandsäge fix befestigt vorliegt.

Die Kommunikationsvorrichtung, die im Kontext der Erfindung verwendet wird, kann eine passive oder eine aktive Kommunikationsvorrichtung sein. Solche Kommunikationsvorrichtungen werden vorzugsweise auch als "Tag", wobei die im Kontext der vorliegenden Erfindung zum Einsatz kommende Kommunikationsvorrichtung vorzugsweise auf Nahfeld-Kommunikation (near field communication, NFC) oder der RFID-Technologie basiert (Radio Frequency IDentification).

Vorzugsweise kann das Lesegerät, das im Englischen als "reader" bezeichnet wird, mittels von ihm ausgesendeten Funkwellen dem Tag Energie zur Verfügung stellen. Der Tag kann die auf diese Weise erhaltene Energie verwenden, um Informationen zu senden, wenn er über ausreichend Energie dazu verfügt. Solche Tags, die ihre Betriebsenergie von einem Lesegerät erhalten, werden im Sinne der Erfindung als "passive Kommunikationsvorrichtungen" bezeichnet.

Die im Kontext der vorliegenden Erfindung zum Einsatz kommende Kommunikationsvorrichtung kann aber auch als "aktive Kommunikationsvorrichtung" ausgebildet sein. Aktive Kommunikationsvorrichtung sind im Sinne der Erfindung dadurch gekennzeichnet, dass sie entweder eine eigene Energieversorgungsvorrichtung, wie eine Batterie, aufweisen oder ihre Betriebsenergie aus dem Betrieb der Werkzeugmaschine, an der sie angeordnet vorliegen, gewinnen können. Die Gewinnung von Betriebsenergie aus einem Arbeitsprozess der Werkzeugmaschine wird im Sinne der Erfindung als "Energy Harvesting" bezeichnet. Kommunikationsvorrichtungen, die ihre Betriebsenergie aus einem Arbeitsprozess der Werkzeugmaschine wird im Sinne der Erfindung als "Energy Harvesting" mit Methoden des "Energy Harvesting" aus dem Betrieb der Werkzeugmaschine gewinnen können, können vor allem in solchen Anwendungsfällen gut eingesetzt werden, in denen wenig Bauraum zur Verfügung steht oder besonders dünne Kommunikationsvorrichtungen eingesetzt werden sollen, da Energieversorgungsvorrichtungen, wie Batterien, oft einen zu großen Bauraum beanspruchen.

Durch die Gewinnung der Betriebsenergie für die Kommunikationsvorrichtung aus dem Betrieb der Werkzeugmaschine selbst kann im Rahmen der Erfindung eine aktive Kommunikationsvorrichtung verwendet werden, die beispielsweise von einem aktiven Tag oder einem Beacon gebildet werden kann. Die bevorzugt aktiv ausgebildete Kommunikationsvorrichtung kann beispielsweise von einer elektronischen Baugruppe gebildet werden, wobei im Kontext der vorliegenden Erfindung vorteilhafterweise auf die Vorsehung einer Batterie als Energieversorgungsvorrichtung für die Kommunikationsvorrichtung verzichtet werden kann. Dies insbesondere deshalb, weil im Kontext der vorliegenden Erfindung die Kommunikationsvorrichtung selbst in der Lage ist, die für ihren Betrieb benötigte Energie aus dem Arbeitsprozess der Werkzeugmaschine zu gewinnen. Auf diese Weise kann ein sehr kleines kompaktes Datenaustauschsystem für eine Wandsäge bereitgestellt werden, wobei insbesondere die Kommunikationsvorrichtung besonders einfach und unkompliziert in das Sägeblatt der Wandsäge integriert werden kann. Es war vollkommen überraschend, dass durch die Erfindung auf die Vorsehung einer Batterie als Energieversorgungsvorrichtung in einer Kommunikationsvorrichtung verzichtet werden kann. Es stellt einen wesentlichen Vorteil der Erfindung dar, dass eine Kommunikationsvorrichtung, die eine Energy Harvesting-Funktion aufweist, auch in sehr dünne Werkzeuge, wie Trenn-, Schneide- oder Sägeblätter, integriert werden kann.

Die bevorzugt als aktiver Tag oder Beacon ausgebildete Kommunikationsvorrichtung ist vorzugsweise dazu eingerichtet, von sich aus, d.h. «aktiv», Signale zu sende, ohne dabei auf eine fremde Energieversorgung angewiesen zu sein.

Die Gewinnung der Energie aus einem Arbeitsprozess der Wandsäge kann im Sinne der Erfindung bevorzugt auch als «Energy Harvesting» bezeichnet werden. Es ist im Sinne der Erfindung bevorzugt, dass der während des Betriebs der Wandsäge entstehenden Energie Leistung entzogen werden kann, um die bevorzugt aktiv ausgebildete Kommunikationsvorrichtung mit Energie zu versorgen. Die Kommunikationsvorrichtung kann die aus dem Arbeitsprozess der Wandsäge gewonnene Energie vorzugsweise nutzen, um Betriebsparameter der Wandsäge und/oder des Sägeblattes zu ermitteln und zu speichern, d.h. aufzuzeichnen. Die Formulierung «Arbeitsprozess der Wandsäge» kann im Sinne der Erfindung bevorzugt gleichbedeutend mit den Formulierungen «Betrieb der Wandsäge», «Sägeprozess» oder «Durchführung eines Arbeitsprozesses mit der Wandsäge» verwendet werden.

Eine Grundidee, die der Erfindung zugrunde liegt, besteht darin, dass die Energie für den Betrieb der Kommunikationsvorrichtung gewonnen bzw. aus dem Arbeitsprozess der Wandsäge abgezweigt werden kann, sobald die Wandsäge arbeitet, d.h. in Betrieb ist. Die für den Betrieb der Kommunikationsvorrichtung erforderliche Energie kann im Sinne der Erfindung bevorzugt auch als «Betriebsenergie» bezeichnet werden. Aufgrund der Energiegewinnung während des Betriebs der Wandsäge steht der bevorzugt aktiv ausgebildeten Kommunikationsvorrichtung vorteilhafterweise immer dann, wenn mit der Wandsäge gearbeitet wird, ausreichend Energie zur Verfügung, um Betriebsparameter der Wandsäge und/oder des Sägeblatts aufzuzeichnen. Dadurch kann vorteilhafterweise eine im Wesentlichen lückenlose Aufzeichnung der Betriebsparameter der Wandsäge und/oder des Sägeblatts ermöglicht werden.

Um Beton zerteilen zu können, weisen die Sägeblätter von Wandsägen häufig Segmente auf, die Diamanten oder Diamantsplitter aufweisen können, um die Schneidleistung zu erhöhen. Beim Sägen mit solchen bevorzugt diamant-besetzten Sägeblättern werden die Segmente des Sägeblattes mit hoher Kraft in den zu bearbeitenden Beton-Untergrund gedrückt. Dadurch werden sog. Mikrosprengungen hervorgerufen, die eine Grundvibration des Sägeprozesses erzeugen. Mit anderen Worten können beim Sägen mit bevorzugt diamant-besetzten Sägeblättern starke Vibrationen entstehen, die im Kontext der vorliegenden Erfindung als «Grundvibration» bezeichnet werden. Die Grundvibration entsteht vorzugsweise durch den Sägeprozess und das Hineindrücken des segmentbesetzten Sägeblattes in den zu bearbeitenden Untergrund.

Die Segmente können beispielsweise beabstandet auf einem Umfang des Sägeblatts angeordnet vorliegen. Es ist im Sinne der Erfindung besonders bevorzugt, dass die Segmente gleichmäßig auf dem Umfang des Sägeblatts angeordnet vorliegen. Durch die bevorzugt beabstandete Anordnung der Segmente auf dem Umfang des Sägeblatts kann die Grundvibration des Sägeblattes von einer zusätzlichen mechanischen Vibration überlagert werden. Tests haben gezeigt, dass die Frequenz dieser zusätzlichen mechanischen Vibration besonders regelmäßig ist, wobei diese besonders regelmäßige Frequenz der zusätzlichen mechanischen Vibration insbesondere auf die im Wesentlichen konstante, d.h. gleichbleibende Umfangsgeschwindigkeit des Sägeblattes zurückzuführen ist. Dies gilt vor allem dann, wenn die bevorzugt diamant-besetzten Segmente gleichmäßig auf dem Umfang des Sägeblatts angeordnet vorliegen. Es ist im Sinne der Erfindung ganz besonders bevorzugt, dass die Gewinnung der Betriebsenergie für die Kommunikationsvorrichtung unter Ausnutzung dieser Vibrationen des Werkzeugs, beispielsweise eines Sägeblattes, erfolgt. Um dies zu ermöglichen, kann die Kommunikationsvorrichtung ein schwingungsfähiges System umfassen, das im Folgenden konkreter beschrieben wird:
Es ist im Sinne der Erfindung bevorzugt, dass die Kommunikationsvorrichtung ein schwingungsfähiges System zur elektromagnetischen Gewinnung von Energie aus dem Arbeitsprozess der Wandsäge umfasst. Vorzugsweise kann das schwingungsfähige System einen Magneten und eine Spule aufweisen. Das schwingungsfähige System kann beispielsweise von einem Feder-Masse-System gebildet werden, wobei die Masse des Feder-Masse-Systems von dem Magneten gebildet werden kann. Der Magnet kann beispielsweise über eine Spule bewegt werden, so dass in der Spule auf physikalisch bekannte Weise ein Strom induziert und Energie für den Betrieb der Kommunikationsvorrichtung gewonnen wird (elektromagnetische Induktion). Die Induzierung des Stroms erfolgt insbesondere durch eine Relativbewegung von Magnet und Spule, wobei diese Relativbewegung durch die Vibrationen des Sägeblatts der Wandsäge hervorgerufen wird.

In obigem Ausführungsbeispiel der Erfindung wird die Relativbewegung vorzugsweise durch die Vibrationen des Sägeblatts der Wandsäge hervorgerufen. Dabei kann das schwingungsfähige System beispielsweise so ausgelegt werden, dass die Feder derart dimensioniert ist, dass die Feder mit der Frequenz der Vibrationen des Sägeprozesses schwingt. Mit anderen Worten kann die Feder des schwingungsfähigen Feder-Masse-Systems so dimensioniert werden, dass die Frequenzen der Grundvibration und/oder der zusätzlichen mechanischen Vibration Eigenfrequenzen des schwingungsfähigen Feder-Masse-Systems sind.

Es ist im Sinne der Erfindung ganz besonders bevorzugt, dass die Frequenz der zusätzlichen mechanischen Vibration, die vorteilhafterweise besonders regelmäßig ist, zur Auslegung des schwingungsfähigen Systems bzw. zur Einstellung dessen Eigenfrequenz herangezogen wird. Die Feder des bevorzugt als Feder-Masse-System ausgebildeten schwingungsfähigen Systems kann beispielsweise als Membran ausgebildet sein. Mit anderen Worten kann die Membran der Feder in dem Feder-Masse-System entsprechen.

Es ist im Sinne der Erfindung bevorzugt, dass die Kommunikationsvorrichtung einen Kondensator zur Speicherung der Energie, die mit dem schwingungsfähigen System erzeugt wird, umfasst. Mit anderen Worten kann mit der Energie, die mit Hilfe des Magneten und der Spule des schwingungsfähigen Systems gewonnen werden kann, ein Kondensator geladen werden, der Bestandteil der Kommunikationsvorrichtung ist. Wenn der Kondensator ausreichend aufgeladen ist, kann mit seiner Energie die Kommunikationsvorrichtung «aufgeweckt» werden, damit die Kommunikationsvorrichtung mit der Aufzeichnung der Betriebsparameter der Wandsäge und/ oder des Sägeblatts beginnen kann. Es ist im Sinne der Erfindung ganz besonders bevorzugt, dass mit der Energie des Kondensators eine Elektronik der Kommunikationsvorrichtung aufgeweckt werden kann, um mit ihrer Arbeit, d.h. der Aufzeichnung von Betriebsparametern, zu beginnen. Die Formulierung «ausreichende Energie» ist für den Fachmann keine unklare Formulierung, weil der Fachmann aufgrund seiner Erfahrung weiß, wieviel Energie eine bevorzugt aktiv ausgebildete Kommunikationsvorrichtung benötigt, um Betriebsparameter aufzuzeichnen und ggf. in regelmäßigen Zeitabständen zu versenden.

Die Begriffe «Aufzeichnung» und «aufzeichnen» werden im Sinne der Erfindung als Oberbegriff für das Ermitteln und Speichern der Betriebsparameter verwendet. Vorzugsweise werden im Rahmen der Aufzeichnung der Betriebsparameter die Betriebsparameter der Wandsäge und/oder des Sägeblatts ermittelt, d.h. erfasst oder detektiert, wobei die Betriebsparameter anschließend gespeichert werden können. Dazu kann die Kommunikationsvorrichtung einen Speicher umfassen, in dem die Betriebsparameter als Rohdaten und/oder in verarbeiteter Form abgespeichert werden können. Insbesondere ermöglicht die bevorzugt lückenlose Aufzeichnung der Betriebsparameter, dass die Betriebsparameter regelmäßig an eine externe Vorrichtung, an einen Server oder in eine Cloud übertragen und dort ausgewertet oder informationstechnologisch weiterverarbeitet werden können. Bei dem Betriebsparameter kann es sich beispielsweise auch um einen Durchmesser des Werkzeugs der Werkzeugmaschine handeln oder, wenn die Werkzeugmaschine als Säge ausgebildet ist, um einen Durchmesser des Sägeblatts der Säge. Die Betriebsparameter können auch die Angabe von Produkt- oder Werkzeugtypen, Spezifikationen, Seriennummern und/oder Materialnummern umfassen, ohne darauf beschränkt zu sein.

Es ist somit im Sinne der Erfindung bevorzugt, dass die Kommunikationsvorrichtung dazu eingerichtet ist, Betriebsparameter der Wandsäge und/oder des Sägeblatts zu ermitteln und zu speichern, wobei die Kommunikationsvorrichtung darüber hinaus dazu eingerichtet ist, die für die Erfassung und Speicherung der Betriebsparameter erforderliche Energie aus einem Arbeitsprozess der Wandsäge zu gewinnen.

Die Betriebsparameter der Wandsäge und/oder des Sägeblatts können beispielsweise eine Laufzeit der Werkzeugmaschine und/oder des Werkzeugs betreffen oder einen Abnutzungsgrad, eine bearbeitete Fläche, eine Anzahl von Umdrehungen, eine Anzahl von Start- oder Stop-Vorgängen, das Vorkommen eines Falschgebrauchs der Werkzeugmaschine, eine Temperatur oder dergleichen, ohne darauf beschränkt zu sein. Darüber hinaus können auch Betriebsparameter, wie Durchmesser, Typ-Bezeichnung oder Typ-Kennung, Spezifikation, Seriennummer und/oder Materialnummer, ausgelesen werden.

Neben der elektromagnetischen Gewinnung von Energie für den Betrieb der Kommunikationsvorrichtung mit Hilfe des schwingungsfähigen Systems können im Kontext der vorliegenden Erfindung auch anderen Verfahren zur Energiegewinnung eingesetzt werden. Beispielsweise kann Wärme an den bevorzugt diamantbesetzten Segmenten des Sägeblatts entstehen, wenn mit der Wandsäge gearbeitet wird. Die beim Sägeprozess entstehende Wärme bzw. der entstehende Temperaturgradient kann beispielsweise unter Verwendung eines Peltier-Elements genutzt werden, um Energie zum Betrieb der Kommunikationsvorrichtung zu gewinnen. In diesem Ausführungsbeispiel der Erfindung kann die Kommunikationsvorrichtung ein wärmeumwandelndes Element zur thermischen Gewinnung von Energie aus dem Arbeitsprozess der Wandsäge umfassen. Das wärmeumwandelnde Element kann zum Beispiel als Peltier-Element ausgebildet sein oder mindesten ein Peltier-Element umfassen. Diese Art der Energiegewinnung kann im Sinne der Erfindung als «thermische Energiegewinnung» bezeichnet werden.

Bei Betrieb der Wandsäge kann darüber hinaus elektromagnetische Strahlung entstehen. Diese elektromagnetische Strahlung entsteht beispielsweise im Bereich des Motors der Wandsäge, insbesondere aufgrund der hohen nominalen Leistung des Wandsägen-Motors. Zur Umwandlung dieser elektromagnetischen Strahlung in Energie für den Betrieb der Kommunikationsvorrichtung kann die Kommunikationsvorrichtung eine Vorrichtung zur Umwandlung von elektromagnetischer Strahlung aus dem Arbeitsprozess der Wandsäge umfassen, wobei die Vorrichtung zur Umwandlung von elektromagnetischer Strahlung vorzugsweise mindestens eine Antenne umfasst. Mit anderen Worten kann die elektromagnetische Strahlung, die vorzugsweise im Bereich des Motors der Wandsäge entsteht bzw. von dort abgestrahlt wird, von mindestens einer Antenne, die vorzugsweise Bestandteil der Kommunikationsvorrichtung ist, in Energie zum Betrieb der Kommunikationsvorrichtung umgewandelt werden. Diese Art der Energiegewinnung kann im Sinne der Erfindung als «elektromagnetische Energiegewinnung» bezeichnet werden.

Um das Werkzeug Sägeblatt des Arbeitsprozesses in dem zu bearbeitenden Untergrund zu bewegen, ist ein relativ hohes Drehmoment erforderlich. Diese hohen Drehmomente, die vorzugsweise Kräfte im Sägeblatt darstellen, können von einer Vorrichtung zur Umwandlung von mechanischer Energie aus dem Arbeitsprozess der Werkzeugmaschine in eine Energie zum Betrieb der Kommunikationsvorrichtung umgewandelt werden. Mit anderen Worten kann die Kommunikationsvorrichtung eine Vorrichtung zur Umwandlung von mechanischer Energie aus dem Arbeitsprozess der Wandsäge umfassen. Es ist im Sinne der Erfindung bevorzugt, dass die Vorrichtung zur Umwandlung von mechanischer Energie mindestens ein piezoelektrisches Element umfasst, wobei das mindestens eine piezoelektrische Element dazu eingerichtet ist, die Drehmomente und/oder Kräfte im Sägeblatt in Energie zum Betrieb der Kommunikationsvorrichtung umzuwandeln. Das bedeutet im Sinne der Erfindung bevorzugt, dass mit dem mindestens einen piezoelektrischen Element die Drehmomente und/oder Kräfte im Sägeblatt, die im Sinne der Erfindung mit dem Oberbegriff «mechanische Kräfte» zusammengefasst werden können, in Energie zum Aufzeichnen der Betriebsparameter der Wandsäge und/oder des Sägeblatts umgewandelt werden können. Diese Art der Energiegewinnung kann im Sinne der Erfindung als «mechanische Energiegewinnung» bezeichnet werden.

Neben der Wandsäge wird ein Verfahren zur Gewinnung von Energie für eine Kommunikationsvorrichtung offenbart, wobei die Kommunikationsvorrichtung in einem Sägeblatt einer vorgeschlagenen Wandsäge angeordnet vorliegt. Das Verfahren zum Energy Harvesting im Kontext einer Werkzeugmaschine ist durch die folgenden Verfahrensschritte gekennzeichnet:
a) Bereitstellung der Wandsäge mit einem Sägeblatt, wobei das Sägeblatt eine Kommunikationsvorrichtung umfasst,
b) Betrieb der Wandsäge,
c) Gewinnung von Energie aus dem Betrieb der Wandsäge durch die Kommunikationsvorrichtung,
d) Aufzeichnung von Betriebsparametern der Wandsäge und/oder des Sägeblatts durch die Kommunikationsvorrichtung, wobei die für die Aufzeichnung der Betriebsparameter erforderliche Energie von der Kommunikationsvorrichtung aus dem Betrieb der Wandsäge gewonnen wird.

Es ist im Sinne der Erfindung bevorzugt, dass die Energie, die aus dem Betrieb der Wandsäge gewonnen wird, elektromagnetisch, thermisch und/oder mechanisch gewonnen wird. Vorzugsweise kann die Energie, die aus dem Betrieb der Wandsäge gewonnen wird, unter Verwendung eines schwingungsfähigen Systems gewonnen werden, wobei das schwingungsfähige System zumindest einen Magneten und eine Spule aufweist. Es ist im Sinne der Erfindung ganz besonders bevorzugt, dass die Energie aus dem Arbeitsprozess der Wandsäge durch eine Relativbewegung zwischen Spule und Magnet gewonnen wird. Dabei kann die Relativbewegung zwischen Spule und Magnet insbesondere durch die Vibrationen, die bei Betrieb der Wandsäge entstehen, erzeugt werden. Mit anderen Worten können in dieser Ausführungsform der Erfindung die Vibrationen, die während der Arbeit mit der Wandsäge entstehen, ausgenutzt, um die Betriebsenergie für die Kommunikationsvorrichtung zur Aufzeichnung von Betriebsparametern der Wandsäge und/oder des Sägeblatts zu gewinnen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung der Wandsäge
- Fig. 2: Ansicht einer bevorzugten Ausgestaltung eines schwingungsfähigen Systems
- Fig. 3: Verwendung eines schwingungsfähigen Systems an einer Werkzeugmaschine
- Fig. 4: Verwendung eines wärmeumwandelnden Elements an einer Werkzeugmaschine
- Fig. 5: Verwendung einer Vorrichtung zur Umwandlung von elektromagnetischer Strahlung an einer Werkzeugmaschine
- Fig. 6: Verwendung einer Vorrichtung zur Umwandlung von mechanischer Energie an einer Werkzeugmaschine

### Ausführungsbeispiele und Figurenbeschreibung:

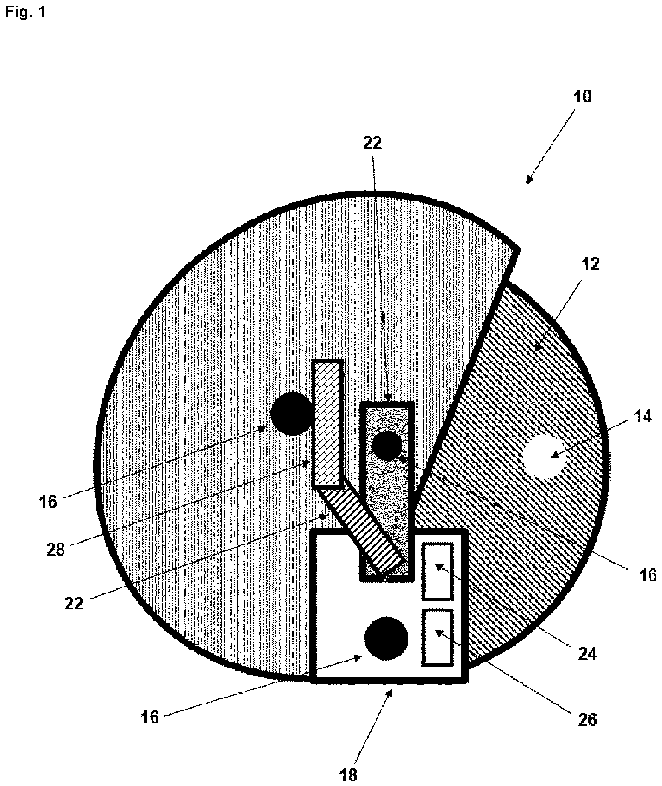

Figur 1 zeigt eine bevorzugte Ausgestaltung der Wandsäge 10. Die Wandsäge 10 kann zum Einbringen von Schnitten in einen Untergrund mit einem Sägeblatt 12 verbunden werden, wobei das Sägeblatt 12 der Wandsäge 10 von einem Motor 26 der Wandsäge 10 zu einer Drehbewegung angetrieben werden kann. Während des Betriebs der Wandsäge 10 kann das Sägeblatt 12 zumindest teilweise von einem Blattschutz 20 umgeben sein, um einen Nutzer der Wandsäge 10 vor herumfliegenden Partikeln und Stücken aus dem Untergrund zu schützen. Der Blattschutz 20 kann über einen Schwenkarm 22 beweglich, insbesondere schwenkbar, mit der Wandsäge 10 verbunden vorliegen. Darüber hinaus weist die Wandsäge 10 einen Sägekopf 18 auf, in dem beispielsweise die Steuerelektronik 24 der enthalten sein kann. Die Steuerelektronik 24 ist vorzugsweise zur Steuerung der Wandsäge 10 eingerichtet. Der Blattschutz 20 kann von einem Blattschutzhalter 28 gehalten werden.

In dem in Figur 1 abgebildeten Ausführungsbeispiel der Erfindung weist das Sägeblatt 12 eine Kommunikationsvorrichtung 14 auf. Das bedeutet im Sinne der Erfindung bevorzugt, dass an dem Sägeblatt 12 eine Kommunikationsvorrichtung 14 vorgesehen ist. Die Kommunikationsvorrichtung 14 kann beispielsweise eine elektronische Baugruppe darstellen, die als Tag oder Beacon ausgebildet ist. Die Kommunikationsvorrichtung 14 ist dazu eingerichtet, mit einem Lesegerät 16 Daten auszutauschen, wobei das Lesegerät 16 die Kommunikationsvorrichtung 14 mit Energie versorgen kann. Es ist im Sinne der Erfindung allerdings besonders bevorzugt, dass die Kommunikationsvorrichtung 14 die für ihren Betrieb erforderliche Energie aus dem Betrieb der Wandsäge 10 gewinnen bzw. abzweigen kann. In dieser Ausgestaltung der Erfindung weist die Kommunikationsvorrichtung 14 eine Energy Harvesting-Funktion auf.

Das Lesegerät 16 ist Bestandteil der Wandsäge 10 und kann an verschiedenen Positionen an der Wandsäge 10 angeordnet vorliegen. Mögliche Positionen des Lesegeräts 16 an der Wandsäge 10 sind in Figur 1 mit schwarzen Kreisen dargestellt und mit dem Bezugszeichen 16 bezeichnet. Die vorgeschlagene Wandsäge 10 weist mindestens ein Lesegerät 16. Insbesondere kann das Lesegerät 16 an dem Sägekopf 18, dem Blattschutz 20, dem Blattschutzhalter 28 oder dem Schwenkarm 22 der Wandsäge 10 angeordnet vorliegen. Die Wandsäge 10 kann aber auch mehr als ein Lesegerät 16 aufweisen. Beispielsweise kann die Wandsäge 10 netzbetrieben sein, d.h. elektrische Energie von einem Stromnetz erhalten. Das Lesegerät 16 kann beispielsweise eine eigene kleine Batterie (nicht dargestellt) zur Energieversorgung aufweisen.

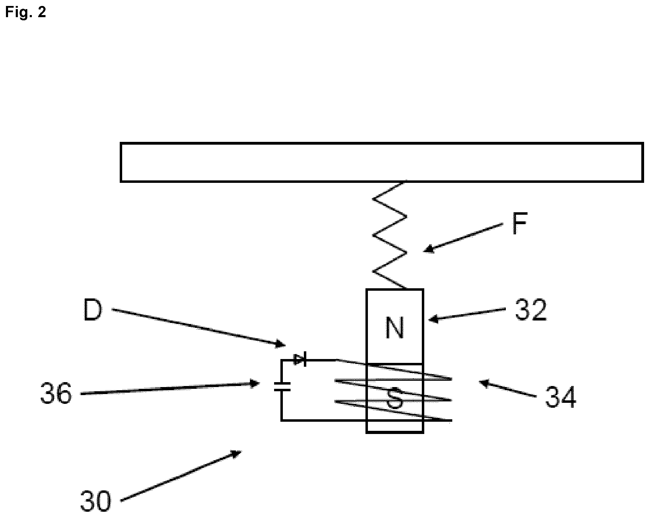

Figur 2 zeigt eine bevorzugte Ausgestaltung eines schwingungsfähigen Systems 30. Das schwingungsfähige System 30 kann eine Feder F und einen Magneten 32 umfassen. Die Pole des Magneten 32 sind in Figur 2 mit den Buchstaben N für Nordpol und S für Südpol gekennzeichnet. Bei dem in Figur 2 dargestellten Magneten 32 handelt es sich vorzugsweise um einen Dauermagneten 32 mit festen Polen N, S. Die Feder 32 in dem schwingungsfähigen System 30 kann beispielsweise auch von einem Dämpfer oder einer Membran gebildet werden. Der Magnet 32 kann in einer Spule 34 angeordnet vorliegen, wobei die Spule 34 in einem Stromkreis mit einem Kondensator 36 und/oder einer Diode D verbunden ist. Mit anderen Worten kann ein Stromkreis gebildet werden, der die Spule 34, den Kondensator 36 und eine Diode D umfasst.

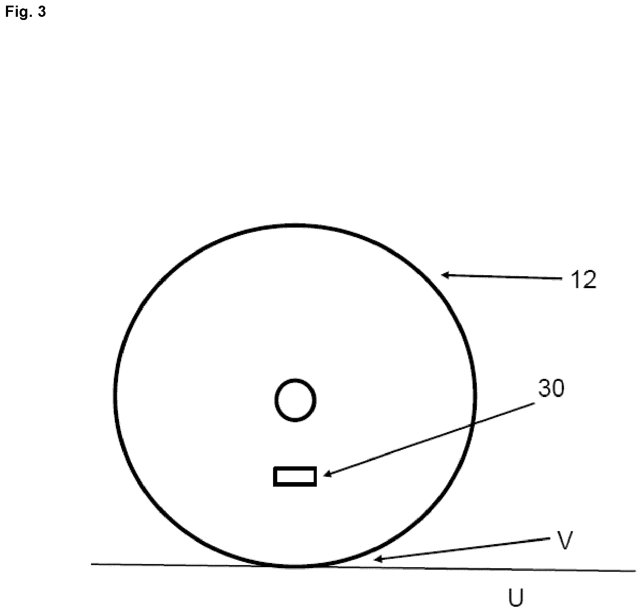

Wie in Figur 3 abgebildet, kann das schwingungsfähige System 30 an einem Werkzeug 12 einer Werkzeugmaschine 10, beispielsweise an einem Sägeblatt 12 eines Säge 10, angeordnet bzw. angebracht vorliegen. Wenn das Sägeblatt 12 den Untergrund U berührt, um diesen zu schneiden, kann es zu Vibrationen V kommen, die von dem schwingungsfähigen System 30 ermittelt und von einer Steuereinrichtung (nicht dargestellt) ausgewertet werden können.

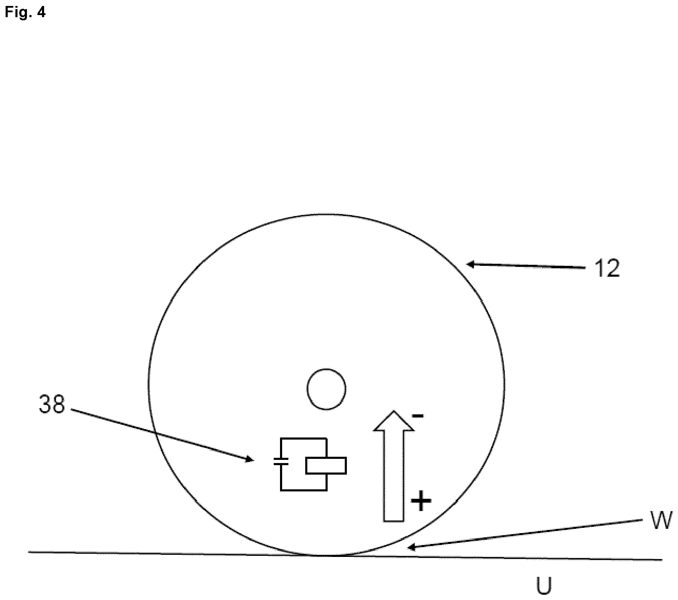

In Figur 4 ist die Verwendung eines wärmeumwandelnden Elements 38 an einer Werkzeugmaschine 10 dargestellt. Bei der Bearbeitung des Untergrunds U durch ein Werkzeug 12 der Werkzeugmaschine 10 können nicht nur Vibrationen V, sondern auch Wärme W entstehen. Vorteilhafterweise kann auch die Wärme W ausgewertet werden, wenn ein wärmeumwandelndes Elements 38 bereitgestellt wird, das an einem Werkzeug 12 der Werkzeugmaschine 10 angeordnet bzw. angebracht vorliegen kann. Das wärmeumwandelnde Element 38 kann ebenfalls in einem Stromkreis eingebettet vorliegen. Der Pfeil im Bereich unten rechts des Sägeblattes 12 deutet in Figur 4 einen möglichen Verlauf der Wärme W innerhalb des Sägeblattes 12 an. Dabei ist es an der Position, die mit einem «Plus» (+) gekennzeichnet ist, wärmer als an einer Position, die mit einem «Minus» (-) gekennzeichnet ist. Bei dem in Figur 4 dargestellten Verlauf der Wärme W ist der Kontaktbereich zwischen Sägeblatt 12 und Untergrund U wärmer, wobei die Wärme W mit zunehmendem Abstand vom Kontaktbereich zwischen Sägeblatt 12 und Untergrund U abnimmt.

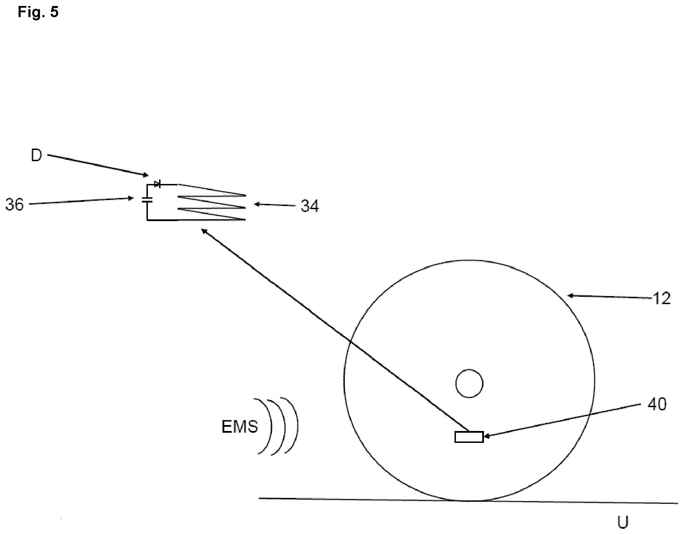

In Figur 5 ist die Verwendung einer Vorrichtung 40 zur Umwandlung von elektromagnetischer Strahlung EMS an einer Werkzeugmaschine 10 dargestellt. Die Vorrichtung 40 zur Umwandlung von elektromagnetischer Strahlung EMS, die insbesondere oben links in Figur 5 abgebildet ist, kann eine Spule 34 und einen Kondensator 36, sowie eine Diode D umfassen. Die Vorrichtung 40 zur Umwandlung von elektromagnetischer Strahlung EMS kann an einem Sägeblatt 12 der Werkzeugmaschine 10 angeordnet bzw. angebracht vorliegen. Elektromagnetische Strahlung EMS, die mit der Vorrichtung 40 zur Umwandlung von elektromagnetischer Strahlung EMS erfasst werden kann, ist in Figur 5 links neben dem Sägeblatt 12 schematisch dargestellt.

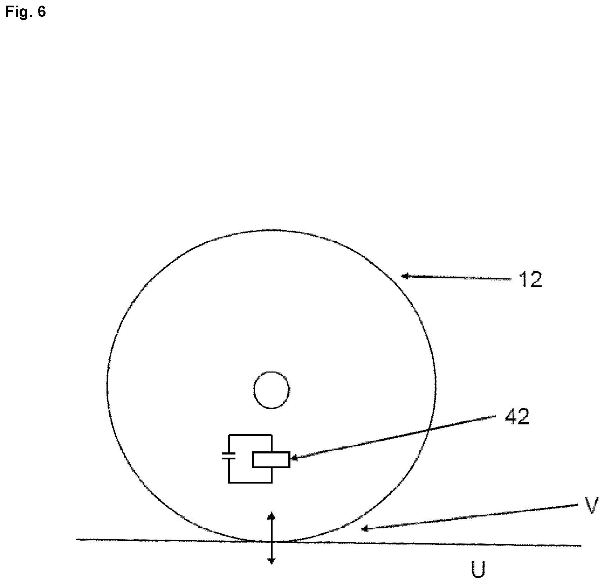

In Figur 6 ist die Verwendung einer Vorrichtung 42 zur Umwandlung von mechanischer Energie an einer Werkzeugmaschine 10 dargestellt. Mit der Vorrichtung 42 zur Umwandlung von mechanischer Energie können beispielsweise Vibrationen V, die vorzugsweise im Kontaktbereich zwischen Sägeblatt 12 und Untergrund U auftreten, erfasst werden. Beispielsweise kann die Vorrichtung 42 zur Umwandlung von mechanischer Energie ein piezoelektrisches Element umfassen oder aus einem solchen gebildet sein.

### Bezugszeichenliste

- 10: Werkzeugmaschine, beispielsweise Wandsäge
- 12: Werkzeug der Werkzeugmaschine, beispielsweise Sägeblatt
- 14: Kommunikationsvorrichtung
- 16: Lesegerät
- 18: Sägekopf
- 20: Blattschutz
- 22: Schwenkarm
- 24: Steuerelektronik
- 26: Motor der Werkzeugmaschine bzw. der Wandsäge
- 28: Blattschutzhalter
- 30: schwingungsfähiges System
- 32: Magnet
- 34: Spule
- 36: Kondensator
- 38: wärmeumwandelndes Element
- 40: Vorrichtung zur Umwandlung von elektromagnetischer Strahlung
- 42: Vorrichtung zur Umwandlung von mechanischer Energie
- D: Diode
- F: Feder
- U: Untergrund
- V: Vibrationen
- N: Nordpol eines Magneten
- S: Südpol eines Magneten
- W: Wärme
- EMS: elektromagnetische Strahlung

## Patentansprüche

1. Wandsäge (10) zum Einbringen von Schnitten in einen Untergrund, insbesondere Beton, wobei die Wandsäge (10) zum Einbringen der Schnitte mit einem Sägeblatte (12) verbindbar ist und einen Sägekopf (18), einen Blattschutz (20), einen Blattschutzhalter (28) und einen Schwenkarm (22) aufweist
**dadurch gekennzeichnet, dass**
das Sägeblatt (12) eine Kommunikationsvorrichtung (14) umfasst, wobei die Kommunikationsvorrichtung (14) dazu eingerichtet ist, Betriebsparameter der Wandsäge (10) und/oder des Sägeblatts (12) aufzuzeichnen, wobei die Wandsäge (10) ein Lesegerät (16) zum Auslesen von Daten aus der Kommunikationsvorrichtung (14) aufweist, wobei das Lesegerät (16) in oder an dem Sägekopf (18), dem Blattschutz (20), dem Blattschutzhalter (28) oder dem Schwenkarm (22) der Wandsäge (10) angeordnet vorliegt.

2. Wandsäge (10) nach Anspruch 1
**dadurch gekennzeichnet, dass**
die Wandsäge (10) eine Steuerelektronik (24) umfasst, wobei die Steuerelektronik (24) mit dem Lesegerät (16) verbindbar ist.

3. Wandsäge (10) nach Anspruch 1 oder 2
**dadurch gekennzeichnet, dass**
die Kommunikationsvorrichtung (14) als aktive Kommunikationsvorrichtung ausgebildet ist.

4. Wandsäge (10) nach einem der vorhergehenden Ansprüche
**dadurch gekennzeichnet, dass**
die Kommunikationsvorrichtung (14) ein schwingungsfähiges System (30) zur elektromagnetischen Gewinnung von Energie aus dem Arbeitsprozess der Wandsäge (10) umfasst.

5. Wandsäge (10) nach Anspruch 4
**dadurch gekennzeichnet, dass**
das schwingungsfähige System (30) einen Magneten (32) und eine Spule (34) aufweist.

6. Wandsäge (10) nach Anspruch 4 oder 5
**dadurch gekennzeichnet, dass**
die Kommunikationsvorrichtung (14) einen Kondensator (36) zur Speicherung der Energie, die mit dem schwingungsfähigen System (30) erzeugt wird, umfasst.

7. Wandsäge (10) nach einem der vorhergehenden Ansprüche
**dadurch gekennzeichnet, dass**
die Kommunikationsvorrichtung (14) ein wärmeumwandelndes Element (38) zur thermischen Gewinnung von Energie aus dem Arbeitsprozess der Wandsäge (10) umfasst.

8. Wandsäge (10) nach Anspruch 7
**dadurch gekennzeichnet, dass**
das wärmeumwandelnde Element (38) als Peltier-Element ausgebildet ist oder mindestens ein Peltier-Element umfasst.

9. Wandsäge (10) nach einem der vorhergehenden Ansprüche
**dadurch gekennzeichnet, dass**
die Kommunikationsvorrichtung (14) eine Vorrichtung (40) zur Umwandlung von elektromagnetischer Strahlung aus dem Arbeitsprozess der Wandsäge (10) umfasst.

10. Wandsäge (10) nach Anspruch 9
**dadurch gekennzeichnet, dass**
die Vorrichtung (40) zur Umwandlung von elektromagnetischer Strahlung mindestens eine Antenne umfasst.

11. Wandsäge (10) nach einem der vorhergehenden Ansprüche
**dadurch gekennzeichnet, dass**
die Kommunikationsvorrichtung (14) eine Vorrichtung (42) zur Umwandlung von mechanischer Energie aus dem Arbeitsprozess der Wandsäge (10) umfasst.

12. Wandsäge (10) nach Anspruch 11
**dadurch gekennzeichnet, dass**
die Vorrichtung (42) zur Umwandlung von mechanischer Energie mindestens ein piezoelektrisches Element umfasst.
